# DEMANDE DE BREVET EUROPEEN

(11) **EP 2 747 368 A1**
(43) Date de publication de la demande: **25.06.2014**
(21) Numéro de dépôt: 12306630.0
(22) Date de dépôt: 19.12.2012
(51) Int. Cl.: H04L 29/06, H04W 4/00, H04W 8/20, H04W 12/06

(54) **Procédé de personnalisation d'un élément de sécurité**

(71) Demandeur: Gemalto SA, 92190 Meudon (FR)
(72) Inventeur: Phan, Ly-Thanh, 13705 LA CIOTAT (FR)

(57) **Abrégé**

L'invention concerne un procédé de personnalisation d'un premier élément de sécurité (10) coopérant avec un premier terminal de télécommunications (11), le procédé consistant à :
i- Transmettre un identifiant du premier élément de sécurité (10) à un second terminal de télécommunications (12), le second terminal de télécommunications (12) comprenant un second élément de sécurité (13), le second élément de sécurité (13) comprenant un second identifiant ;
ii- Transmettre les premier et second identifiants du second terminal (12) de télécommunications à un serveur de personnalisation (14) ;
iii- En cas d'authentification positive des premier et second identifiants au niveau du serveur de personnalisation (14), personnaliser le premier élément de sécurité (10) par l'intermédiaire du second terminal de télécommunications (12).

## Description

Le domaine de l'invention est celui des télécommunications. Plus précisément, la présente invention concerne un procédé permettant de personnaliser un élément de sécurité tel qu'une carte SIM ou USIM comprise dans un terminal de télécommunications.

Le terminal peut soit être un téléphone mobile ou un smartphone, un PDA, ou alors être un simple modem intégré dans une machine, un compteur (d'électricité ou de gaz par exemple) ou un véhicule pour des applications M2M.

L'élément de sécurité peut également ne pas se présenter sous la forme d'une carte et être intégré dans le terminal, par exemple sous la forme d'une puce soudée dans le terminal. On parle alors d'un élément sécurisé intégré (« embedded secure element » en anglais ou ESE). Un ESE est aussi appelé un eUICC pour « embedded UICC ».

Les fabricants de terminaux mobiles proposent de plus en plus des terminaux comprenant des eUICC. Ces terminaux ne comprennent donc plus de carte amovible permettant de s'authentifier auprès du réseau de télécommunications.

Dans le cadre des communications M2M, il est souhaitable d'intégrer des eUICC dans les machines, par exemple lorsque celles-ci sont soumises à des vibrations (par exemple dans le cas de véhicules automobiles).

Un problème général se pose pour la personnalisation des UICC et des eUICC, notamment pour y stocker des données confidentielles permettant à l'abonner de s'authentifier sur le réseau de l'opérateur. Ces données confidentielles comprennent notamment le couple IMSI/Ki, un jeu de répertoires, des paramètres de l'opérateur (dont son logo), le nombre maximum de SMS pouvant être stockés,... Cette personnalisation doit dans de nombreux cas pouvoir être faite à distance, une fois que l'eUICC (UICC) et le terminal qui le comprend sont sur le marché.

Il est connu de pré-personnaliser des UICC ou des eUICC avec des abonnements temporaires, aussi appelés abonnements « bootstrap », pour que les terminaux puissent se connecter au réseau d'un opérateur pour télécharger des données de personnalisation définitives. L'opérateur peut ainsi effectuer des personnalisations par OTA puisqu'aucun abonnement opérationnel n'est présent dans les UICC ou eUICC.

L'inconvénient posé par des abonnements temporaires est qu'il est nécessaire de les provisionner (provision d'IMSIs temporaires) au niveau des HLRs du réseau de l'opérateur. Ceci représente un coût non négligeable à la charge de l'opérateur.

La présente invention a notamment pour objectif de remédier à cet inconvénient.

Plus précisément, l'invention propose un procédé de personnalisation d'un premier élément de sécurité coopérant avec un premier terminal de télécommunications, ce procédé consistant à :
i- Transmettre un identifiant du premier élément de sécurité à un second terminal de télécommunications, le second terminal de télécommunications comprenant un second élément de sécurité, le second élément de sécurité comprenant un second identifiant ;
ii- Transmettre les premier et second identifiants du second terminal de télécommunications à un serveur de personnalisation ;
iii- En cas d'authentification positive des premier et second identifiants au niveau du serveur de personnalisation, personnaliser le premier élément de sécurité par l'intermédiaire du second terminal de télécommunications.

Le premier élément de sécurité est préférentiellement un eUICC.

Les premier et second terminaux de télécommunications communiquent avantageusement entre eux par une liaison courte distance de type NFC, Bluetooth, Wifi direct, infra-rouge ou filaire.

Préférentiellement, la personnalisation consiste à transmettre du serveur au premier élément de sécurité des données lui permettant de se connecter à un réseau de télécommunications.

Avantageusement, l'étape -i- est précédée par une demande de personnalisation transmise du premier élément de sécurité au second élément de sécurité.

La transmission des données entre le serveur et le premier élément de sécurité est préférentiellement chiffrée.

Avantageusement, l'étape -i- consiste à transmettre une valeur aléatoire du second élément de sécurité au premier élément de sécurité, à signer cette valeur aléatoire dans le premier élément de sécurité et à vérifier la signature dans le second élément de sécurité.

L'invention sera mieux comprise à la lecture de la description suivante d'un mode de mise en oeuvre préférentiel, donné à, titre illustratif et non limitatif, et des dessins annexés, dans lesquels :
- La figure 1 représente un système de personnalisation d'un élément de sécurité selon la présente invention ;
- La figure 2 représente les différentes étapes du procédé selon la présente invention.

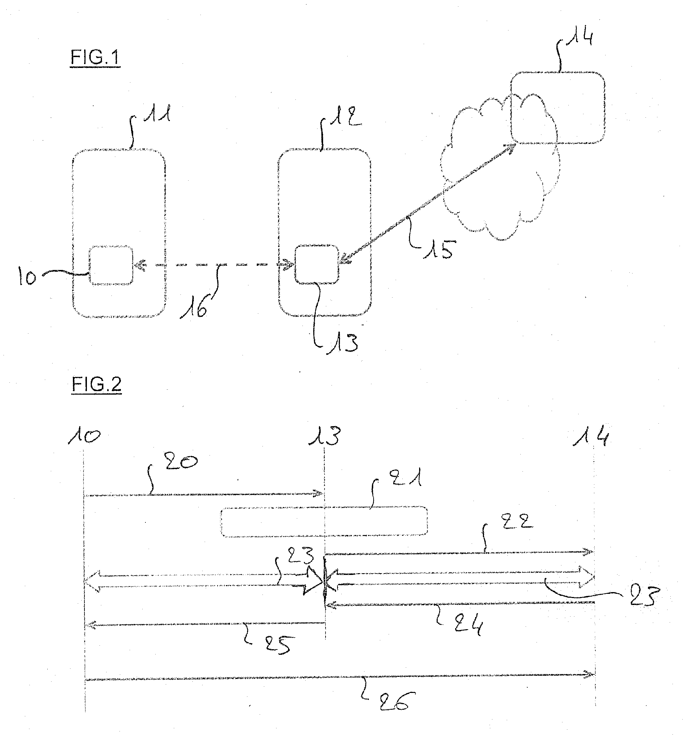

La figure 1 représente un système de personnalisation d'un élément de sécurité selon la présente invention.

Dans le système de la figure 1, un premier élément de sécurité 10, par exemple constitué par un eUICC ou un UICC, coopère avec un premier terminal de télécommunications 11. L'élément de sécurité 10 n'a pas été personnalisé, c'est-à-dire qu'il ne comprend pas les données lui permettant de se connecter à un réseau d'opérateur. L'élément de sécurité comprend uniquement un identifiant, appelé premier identifiant.

L'invention propose, afin de personnaliser le premier élément de sécurité 10, d'utiliser un second terminal 12 comprenant un second élément de sécurité 13, également sous la forme d'un UICC ou eUICC. Ce second élément de sécurité 13 comprend un identifiant, appelé second identifiant. Le second élément de sécurité 13 est personnalisé, c'est-à-dire qu'il est apte à communiquer avec un réseau d'opérateur et notamment avec un serveur de personnalisation 14, par l'intermédiaire d'une liaison 15 qui peut être de type filaire, par exemple ADSL (liaison large bande), ou sans fil (GSM, 3G ou LTE).

Les premier 10 et second 13 éléments de sécurité communiquent entre eux par une liaison courte distance 16, par exemple NFC, Bluetooth, Wifi direct, infra-rouge ou éventuellement filaire. Ils sont donc à proximité l'un de l'autre.

L'invention propose essentiellement de réaliser la personnalisation du premier élément de sécurité 10 par le serveur 14, par l'intermédiaire du second élément de sécurité 13.

Le procédé selon l'invention est décrit en référence à la figure 2.

Le procédé se déroule comme suit : le premier élément de sécurité 10 comporte un identifiant permettant au second élément de sécurité 13 et surtout au serveur 14 de l'authentifier. Cet identifiant est préférentiellement un certificat (certificat de type X.509 par exemple) lui permettant de signer (par une clé privée) une valeur aléatoire qui lui est transmise par le second élément de sécurité 13, après établissement d'une liaison courte distance 16 entre ces deux éléments de sécurité. Cette transmission est par exemple réalisée selon un processus classique appelé « challenge/response », à l'initiative de l'élément de sécurité 13. La valeur aléatoire signée est transmise, lors d'une étape 20, du premier élément de sécurité 10 au second élément de sécurité 13.

La demande de personnalisation peut également émaner du premier élément de sécurité 10.

Le second élément de sécurité 13 peut authentifier le premier élément de sécurité 10 en utilisant la clé publique correspondante pour déchiffrer la valeur aléatoire signée reçue. Si la valeur aléatoire transmise est identique à celle reçue (après déchiffrement), le second élément de sécurité 13 sait qu'il communique avec un premier élément de sécurité 10 avec lequel il a le droit de communiquer.

En cas d'authentification positive (étape 21) de l'élément de sécurité 10, l'élément de sécurité 13 transmet (étape 22) l'identifiant du premier élément de sécurité 10 ainsi que son propre identifiant (second identifiant) au serveur de personnalisation 14.

Le serveur 14 vérifie alors l'identité du premier élément de sécurité 10 (grâce à son certificat) et celle du second élément de sécurité 13. L'identifiant du second élément de sécurité 13 est par exemple son IMSI. Cette vérification consiste par exemple à vérifier que le second élément de sécurité 13 a les droits pour personnaliser l'élément de sécurité 10 (notamment que l'opérateur de l'élément de sécurité 13 contacté a les droits pour personnaliser l'élément de sécurité 10, par exemple parce que l'élément de sécurité 13 possède un abonnement valide pour effectuer cette opération auprès de son opérateur de télécommunications).

En cas d'authentification positive des premier et second identifiants au niveau du serveur de personnalisation 14, le serveur 14 établit, par l'intermédiaire de l'élément de sécurité 13, une liaison sécurisée avec l'élément de sécurité 10 (étape 23). Préalablement à l'établissement de cette liaison sécurisée, le serveur 14 génère un abonnement valide pour le premier élément de sécurité 10 et chiffre les données pour cet abonnement avec la clé publique du premier élément de sécurité (comprise dans son certificat). Le serveur 14 transmet les données d'abonnement chiffrées avec la clé publique au second élément de sécurité 13 (étape 24) qui les retransmet au premier élément de sécurité 10 (étape 25) par la liaison courte distance 16.

Il est possible de chiffrer des données de personnalisation avec la clé publique, mais ceci est assez consommateur de temps lors du procédé de chiffrement et de déchiffrement pour de grandes quantités de données transmises. Pour de gros blocs d'informations comme des données de personnalisation, on utilisera donc préférentiellement un algorithme a clés symétriques (3DES par exemple) pour chiffrer les blocs de données, puis on cryptera la clé de chiffrement avec la clé publique de l'élément de sécurité 10. Les blocs ainsi chiffrés et la clé de chiffrement sont chiffrés par la clé publique de l'élément de sécurité 10 par le serveur 12 et transmis à l'élément de sécurité 10.

Le premier élément de sécurité 10 vérifie alors l'intégrité et l'authenticité des blocs de données reçus, déchiffre la clé de chiffrement des blocs de données de personnalisation à l'aide de sa clé privée et utilise cette clé de déchiffrement pour déchiffrer les blocs reçus.

Le premier élément de sécurité 10 est ainsi personnalisé avec des données d'abonnement lui permettant de se connecter ultérieurement au réseau de télécommunication de l'opérateur auquel correspondent ces données d'abonnement.

Une étape 26 facultative consiste à transmettre du premier élément de sécurité 10 au serveur 14 un message d'acquittement (par exemple en ouvrant un canal de données GPRS) lui indiquant que sa personnalisation s'est bien passée. Il transmet par exemple directement au serveur 14 la signature des données d'abonnement reçues déchiffrées par sa clé privée.

Le premier élément de sécurité 10 est de préférence un eUICC mais il peut également s'agir d'un élément extractible (par exemple une carte de format SIM, mini Sim ou micro-Sim, voire de format micro-SD) du terminal 11.

La transmission des données entre le serveur 14 et le premier élément de sécurité 10 est préférentiellement chiffrée, afin d'assurer la confidentialité des données de personnalisation transmises.

## Revendications

1. Procédé de personnalisation d'un premier élément de sécurité (10) coopérant avec un premier terminal de télécommunications (11), **caractérisé en ce qu**'il consiste à :
i- Transmettre un identifiant dudit premier élément de sécurité (10) à un second terminal de télécommunications (12), ledit second terminal de télécommunications (12) comprenant un second élément de sécurité (13), ledit second élément de sécurité (13) comprenant un second identifiant ;
ii- Transmettre lesdits premier et second identifiants dudit second terminal (12) de télécommunications à un serveur de personnalisation (14) ;
iii- En cas d'authentification positive desdits premier et second identifiants au niveau dudit serveur de personnalisation (14), personnaliser ledit premier élément de sécurité (10) par l'intermédiaire dudit second terminal de télécommunications (12).

2. Procédé selon la revendication 1, **caractérisé en ce que** ledit premier élément de sécurité (10) est un eUICC.

3. Procédé selon l'une des revendications 1 et 2, **caractérisé en ce que** lesdits premier et second terminaux de télécommunications (11, 12) communiquent entre eux par une liaison courte distance (16) de type NFC, Bluetooth, Wifi direct, infra-rouge ou filaire.

4. Procédé selon l'une des revendications 1 à 3, **caractérisé en ce que** ladite personnalisation consiste à transmettre dudit serveur (14) audit premier élément de sécurité (10) des données lui permettant de se connecter à un réseau de télécommunications.

5. Procédé selon l'une des revendications 1 à 4, **caractérisé en ce que** l'étape -i- est précédée par une demande de personnalisation transmise dudit premier élément de sécurité (10) audit second élément de sécurité (13).

6. Procédé selon l'une des revendications 1 à 5, **caractérisé en ce que** la transmission des données entre ledit serveur (14) et ledit premier élément de sécurité (10) est chiffrée.

7. Procédé selon l'une des revendications 1 à 6, **caractérisé en ce que** l'étape -i-consiste à transmettre une valeur aléatoire dudit second élément de sécurité (13) audit premier élément de sécurité (10), à signer ladite valeur aléatoire dans ledit premier élément de sécurité (10) et à vérifier ladite signature dans ledit second élément de sécurité (13).
